# EUROPEAN PATENT APPLICATION

(11) **EP 1 920 854 A2**
(43) Date of publication of application: **14.05.2008**
(21) Application number: 07120156.0
(22) Date of filing: 07.11.2007
(51) Int. Cl.: B09B 1/00, B09C 1/00, B09C 1/10, F16K 7/10

(54) **A system and a method for treating landfills or contaminated soil**

(30) Priority: 07.11.2006 IT MI20062132
(71) Applicant: SA ENVITECH S.R.L., 20122 Milano (IT)
(72) Inventor: Aglietto, Ivano, 10147 Torino (IT)
(74) Representative: Gervasi, Gemma

(57) **Abstract**

A system for the treatment of solid waste landfills or polluted soils comprising:
a tube (1), adapted to be introduced for a suitable depth inside the landfill or soil, said tube having a series of openings appropriately spaced along its wall, adapted for the introduction of gas;
a probe (5) adapted to pass through inside said tube, having activable and deactivatable means (8, 8', 8") adapted to form a seal against the internal wall of said tube, feeding means (6, 7) of a gas to said probe, means (12) for appropriately injecting said gas inside said tube and/or through one or more of said openings.

A treatment method by means of said system.

## Description

### FIELD OF THE INVENTION

The present invention relates to a treatment system for the stabilisation of landfills and the reclaiming of contaminated soils.

### PRIOR ART

Various systems have been created in order to accelerate the degradation processes of waste in landfills, to accelerate the stabilisation thereof, to reduce the volume thereof, to decrease the management and closure costs and improve the quality of the percolate.

An increasingly more practiced course is the on-site aerobic stabilisation of the waste by blowing of air.

The oxygen contained in the air creates conditions adapted to modify the conversion process of the biodegradable organic substance contained in the waste from anaerobic to aerobic. Therefore, instead of being converted into methane, carbon dioxide and foul-smelling reduced compounds (sulphur containing hydrogen, mercaptans, indole, skatole, amines, etc.), the organic carbon is transformed into carbon dioxide, water and oxidised substances (nitrates, phosphates, sulphates, etc.). Aerobic metabolism is favoured with respect to anaerobic metabolism from the energetic point of view; furthermore, it implies an increase of temperature (similar to that which occurs in composting) and a considerably faster degradation speed.

Aerobic degradation of waste causes a considerable reduction in landfill volume: this ensures an optimal use of the available space and an extension of the period of use of the landfill itself. The pre-treatment of the waste by means of air also improves the percolate quality.

Several variants have been suggested: firstly the natural draft caused by the temperatures which are naturally created inside the waste after being stacked up was exploited. In order to accelerate the treatment, there has been used the injection of air into the waste mass by means of tubes perforated along all or part of the length and the extraction of gas by means of other tubes driven at appropriate distances.

Similarly, the injection of air or gas of appropriate composition is also employed for contaminated soil reclaiming, where the choice of the gas to be injected depends on the type of pollutant.

The technologies available today on the market present various limitations related to the operating mode of the system.

Some systems (Airflow^{®}, AEROflott^{®}) contemplate the continuous injection of air into the soil, operating at low pressures. In case of poor permeability of the waste or of the treated soil, the low applied pressures do not allow to reach a sufficient range of action, requiring the installation of an excessive number of injection points, to the extent of often making the treatment unfeasible.

Other systems contemplate the injection by means of high-pressure pulses (Biopuster^{®}), but allow to inject only at a certain depth in the same injection point. Therefore, the perfect aeration of the entire depth of the landfill or of the treated soil is often not ensured, specifically if such depth is high, thus reducing the efficacy of the treatment. Such treatment is limited to depths of approximately 8-10 m; in case of higher depths to be treated, it is necessary to process in subsequent steps with consequent increase of time requirements, with increase of costs due to subsequent re-installations, or by means of several injection tubes with perforations at different depths.

None of the available systems allows to alternate pulsed and continuous injection; in the case of soils or landfills with different layers of permeability, in which the application of different types of injection is necessary, such shortcoming may reduce the efficacy and considerably extend the treatment times.

### SUMMARY

The problems identified above have been solved according to the present invention by a system for the treatment of solid waste landfills or polluted soils comprising:
a tube, adapted to be introduced for a suitable depth inside the landfill or soil, said tube having a series of openings appropriately spaced along its wall, adapted for the introduction of gas;
a probe adapted to pass through inside said tube, having activable and deactivatable means adapted to form a seal against the internal wall of said tube, feeding means of a gas to said probe, means for appropriately injecting said gas inside said tube and/or through one or more of said openings. The sealing means may be either pneumatic or hydraulic, according to an embodiment of the invention. They are such to isolate a portion of the tube from the rest of the tube. They may isolate a portion of tube in which the injection means are present at both the upper and the lower part or, according to another embodiment, only at the upper part.

Preferably, means for blowing gas directly into the tube from an extremity thereof are contemplated.

The invention further relates to a treatment method for solid waste landfills or polluted soils comprising:
introducing a tube, having a series of openings appropriately spaced along its wall, adapted for the introduction of gas, for a suitable depth inside the landfill or soil;
positioning a probe in said tube;
forming a seal between said probe and the internal wall of said tube by specific means;
feeding a gas to said probe;
injecting said gas through said probe into said tube and/or through one or more of said openings.

The object of the invention is specifically contained in the accompanying claims.

### LIST OF FIGURES

The present invention will now be illustrated by means of the detailed description of preferred, but not exclusive embodiments provided by way of example only, with the aid of the accompanying figures in which:
figure 1 diagrammatically shows a section view of a treatment system according to the present invention;
figure 2 diagrammatically shows the various components of a probe employed in a system according to the present invention;
figure 3 diagrammatically shows the assembled probe employed in a system according to the present invention;
figure 4 diagrammatically shows a view of how the sealing means may act against the tube.

### DETAILED DESCRIPTION OF AN EMBODIMENT

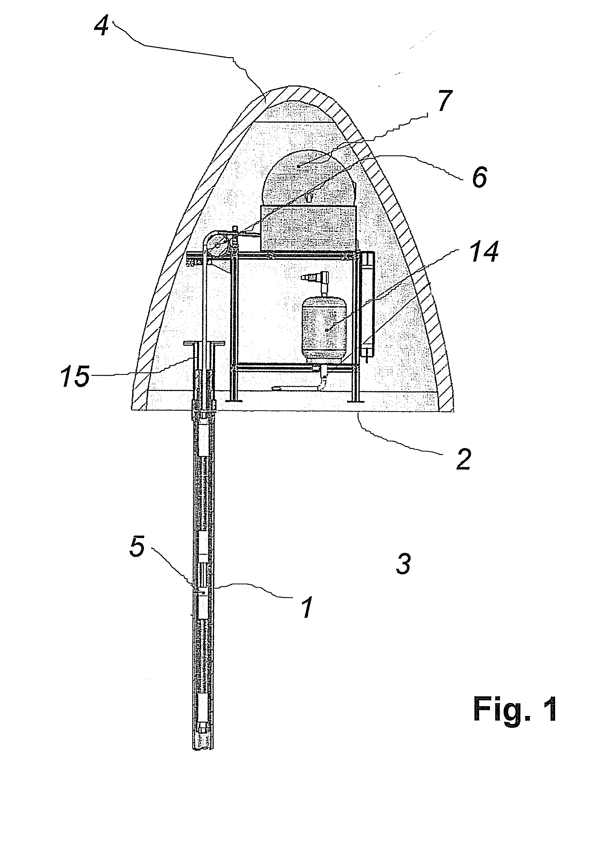

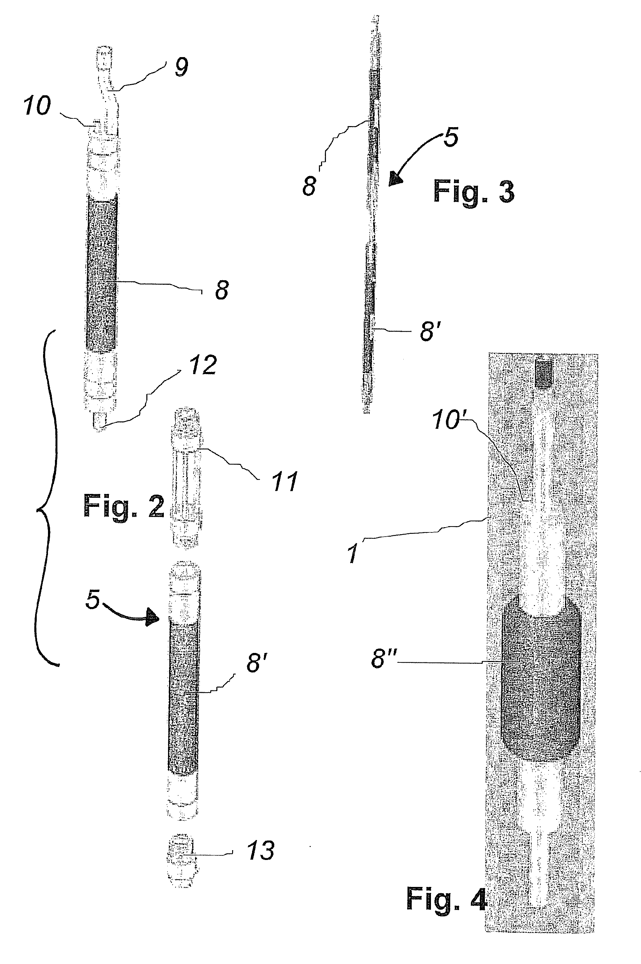

With reference to Figure 1 a treatment system is shown, comprising a tube 1 of which only an initial portion is shown. The tube, of appropriate length, which may reach even 30 or more metres, presents a series of openings (not shown), appropriately spaced preferably along its entire length. It is formed of appropriate material, e.g. plastic material. The diameter of the tube and the features of the openings may be similar to those adopted in the above discussed known art, by way of example tubes with a nominal diameter of 100-200 mm may be used. The tube is driven, preferably vertically, from a surface 2 of a mass 3 to be treated, where mass may indicate either soil or a waste landfill. Optionally, a covering 4 may protect the external structures of the system. A probe 5, e.g. of the type shown in figures 2 and 3, may travel inside the tube. The probe 5 is appropriately suspended and fed with gas, which may be for example air, optionally enriched with oxygen in the case of landfills, or any other gas or vapour appropriate to be blown into the mass to be treated. According to a possible embodiment, the probe is suspended to the same flexible tube 6 adapted to feed it with the gas and which may be unwound or wound by a specific winch 7, flexible tube e.g. connected at the end 9 of the probe which is also a feeding tube. Figure 2 shows that the probe has two hydraulically or pneumatically expandable sections 8 and 8' adapted to form a seal against the internal wall of the tube 2. They may comprise, for example, plastic or elastomeric material membranes. Another type of probe having a single sealing section 8', is shown in figure 4 while it is activated. The sections 8, 8' and 8" may be expanded by feeding a pressurised fluid, which may be a liquid or a gas, preferably air. Such fluid may be appropriately fed, e.g. by means of a second flexible pipe, not shown, through the inlet 10. In the case of the probe in figures 2 and 3, the two sealing sections are connected by a structure 11 having a series of pipes adapted to deliver the seal activating fluid to the lower section. Injection means of the gas, fed through the end 9, inside the tube may be represented by the simple outlet 12; the end 9 and the outlet may be simply connected by means of the upper section 8. The lower section 8' may be similar to the upper one and closed at its lower part by a cap 13. It is apparent that the circuits feeding the gas to be injected in the mass to be treated are separated from the sealing section activation fluid.

A pneumatic system, of which only the reservoir 14 is shown in figure 1, may supply compressed air, if air is fed to the mass to be treated, through the flexible tube 6, in appropriate manner. It may also provide the pressure for activating the probe seals, if pneumatic, using a separate circuit, which may be relieved to be able to move the probe. The probe in figures 2 and 3 is thus adapted to be positioned in the tube and, by activating the seals, may inject gas in the tube portion between the sealing sections. Indeed, one of the most interesting features of the invention is the possibility of blowing the gas through the probe into a restricted portion of the tube, and thus through the openings corresponding to such portion. Such portion is the one delimited at its upper and lower parts by the sealing means, and is height may be selected by positioning the probe in the tube. Alternatively, the probe may be used to blow the gas into the entire portion of tube delimited only at its upper part by the sealing means.

The probe in figure 4 may inject gas in the entire tube portion underneath the seal. Changes may also be contemplated, e.g. the cap 13 of the probe in figures 2 and 3 may be replaced by a remotely controlled valve in order to employ both described feeding types.

Probes like those described are used in other fields of application, e.g. for the injection of concrete in soils to be consolidated; e.g. those marketed by Adriatech can be mentioned by way of example. They are usually employed in wells directly obtained in the soil.

The probe may thus be positioned at different heights and its position may be rapidly changed as needed to inject within the required times and at the required depth. In such a manner, greater depths may be reached than with direct blowing into the tube as occurred in the known art. Furthermore, the pressure in the injection point may be higher, thus avoiding pressure loss in the sections upstream of the tube.

The system further allows, when deemed necessary, to perform direct injection into the tube instead of injection by means of probe. For example, with reference to figure 1, at the inlet of the tube 1 there is contemplated an internal sleeve 15, essentially a short tube segment, appropriately supported, coaxial to the tube 1 and such so as to allow the introduction of the probe 5. In the gap identified between sleeve and tube, a gas may be injected with suitable systems, while the probe is appropriately positioned so as to obstruct the central gap with its sealing means. In this manner, the injection occurs according to the modes of the known art. Other solutions may be identified, such as sealing means between the extremity of the tube 1 and the flexible feeding tubes of the probe and the seals, to be able to inject gas into the portion of tube upstream of the probe.

The system according to the invention is adapted for the reclaiming of muncipal solid waste landfills, in which the presence of organic substance leads to a biodegradation of the waste and to the complete stability of the landfill itself. The system is particularly useful also in the case of old design landfills, in which the lack of a waterproofing bottom layer and of percolate and biogas collection systems make the problem of environmental impact even more critical.

In all cases, the system effectiveness is particularly noticed in the cases in which exploitation has only recently ended and in which, therefore, the environmental impacts are higher.

The innovative features of the system are fully exploited in the cases in which the landfill is more than 7-8 m deep, i.e. in the cases in which the traditional methods would not allow the aeration of the entire depth of the waste body.

Such system may also replace the systems of the known art, however allowing also the direct injection in the tube. The injection pressure may be very high, therefore the system is adapted also for contaminated soil reclaiming. In the case in which the permeability of the soil is low and does not allow the application of the traditional methods, the use of the high-pressure pulse injection system indeed allows to fracture the soil and to permit a more effective propagation of the air in the medium, broadening the range of influence of the injection.

The system indeed allows to inject air or other gases inside the mass to be treated continuously or in pulses at high pressures, e.g. between 5 and 10 bars, therefore considerably higher values than those currently applied.

Furthermore, the high-pressure pulses fracture the mass, allowing a propagation of the air to considerably higher distances.

The system allows to inject air at different depths in the same injection point, so as to guarantee the uniformity of the propagation and allow the reaching of aerobic conditions in all the areas of the landfill. The tube from which gas is blown reaches depths included between 20 and 30 metres, considerably higher than those reached today.

The system is more effective with respect to the known art also in eliminating the volatile reduced compounds which are commonly formed in landfills by anaerobic processes.

Examples of possible use methods are: possibility of air enrichment with oxygen, possibility of air enrichment with water and liquids, possibility of humidification and heating of air.

If required, the temperature of the air introduced into the system may be carefully controlled by means of heaters and monitoring thermal resistors.

## Claims

1. A system for the treatment of solid waste landfills or polluted soils comprising:
a tube (1), adapted to be introduced for a suitable depth inside the landfill or soil, said tube having a series of openings appropriately spaced along its wall, adapted for the introduction of gas;
a probe (5) adapted to travel inside said tube, having activable and deactivatable means (8, 8', 8") adapted to form a seal against the internal wall of said tube, feeding means (6, 7) of a gas to said probe, means (12) for appropriately injecting said gas inside said tube and/or through one or more of said openings.

2. A system according to claim 1, wherein said sealing means are pneumatic or hydraulic.

3. A system according to any preceding claim, wherein said sealing means (8, 8') are adapted to isolate at its upper and lower part a portion of tube where the injection means are present.

4. A system according to any claim from 1 to 2, wherein said sealing means (8") are adapted to isolate at its upper end a portion of tube where the injection means are present.

5. A system according to any preceding claim, wherein said gas feeding means are a flexible tube (6), further adapted to support and move the probe.

6. A system according to any preceding claim, wherein means (15) are provided, adapted to inject gas directly into the tube, from one extremity protruding from the mass to be treated.

7. A method for treating solid waste landfills or polluted soils comprising:
introducing a tube (1), having a series of openings appropriately spaced along its wall, adapted for the introduction of gas, for a suitable depth inside the landfill or soil;
positioning a probe (5) inside said tube;
forming a seal between said probe and the internal wall of said tube by means of specific means (8, 8', 8");
feeding a gas to said probe;
injecting said gas through said probe into said tube and/or through one or more of said openings.

8. A method according to claim 7, wherein said gas is air, optionally enriched with oxygen or other gas.

9. A method according to claim 7 or 8, wherein said gas is injected in a portion of tube delimited by said seal at its upper and lower part.

10. A method according to claim 7 or 8, wherein said gas is injected in a portion of tube delimited by said seal at its upper end.

11. A method according to any claim from 7 to 10, wherein gas is directly fed into said tube from an extremity.

12. A method according to any claim from 7 to 11, wherein said gas is continuously injected.

13. A method according to any claim from 7 to 11, wherein said gas is injected in pulses.
